# EUROPEAN PATENT SPECIFICATION

(11) **EP 1 711 317 B1**
(45) Date of publication and mention of the grant of the patent: **13.08.2008**
(21) Application number: 05701771.7
(22) Date of filing: 28.01.2005
(51) Int. Cl.: B25J 13/08, B25J 19/00

(54) **MACHINE VISION CONTROLLED ROBOT TOOL SYSTEM**
MASCHINENSICHTGESTEUERTES ROBOTERWERKZEUGSYSTEM
SYSTEME D'OUTIL ROBOTIQUE COMMANDE PAR VISIONIQUE

(30) Priority: 30.01.2004 FI 20045020
(43) Date of publication of application: 18.10.2006
(73) Proprietor: Wisematic OY, 33101 Tampere (FI)
(72) Inventor: SANDELIN, Teemu, FI-33540 Tampere (FI); UUSITALO, Jani, FI-33900 Tampere (FI)
(74) Representative: Rahkonen, Erkki Juhani
(86) International application number: PCT/FI2005/050016
(87) International publication number: WO 2005/072917

(56) References cited:
- EP-A2- 0 260 984
- WO-A2-03/064116
- DE-A1- 3 612 144
- US-A- 4 380 696
- US-A- 4 753 569
- US-A- 5 219 264

## Description

The invention relates to a robot tool system as it is known from EP-A- 260984, which is intended to be attached to an arm of a robot, and which comprises at least one tool, an actuator for placing the tool in a use position, as well as a machine vision member with a viewing direction and outlook to the working area of the tools, said machine vision member being arranged to control the movement and function of the tool. Furthermore, the invention relates to a control method for a robot tool system as it is known from EP-A- 260984, which is intended to be attached to an arm of a robot, and which comprises at least one tool, an actuator for placing the tool in a use position, as well as a machine vision member with the viewing direction to the working area of the tools, said machine vision member being used for controlling the movement and function of the tool. The invention also relates to a computer program and to a corresponding software product comprising a set of program commands for controlling a robot tool system as it is known from EP-A- 260984, which robot tool system is intended to be attached to an arm of a robot, and which robot tool system comprises at least one tool, an actuator for placing the tool in a use position, as well as a machine vision member with the viewing direction to the working area of the tools, said machine vision member being used for controlling the movement and function of the tool, and the program comprises program commands for processing the image taken by the machine vision member, as well as an actuator for controlling the tools.

Different kinds of industrial robots that can transfer parts and/or tools are used increasingly in different automatic production lines. Typically the robot used in a production apparatus comprises at least a structure enabling a wide movement, i.e. a so-called arm, and an end effector. The end effector, in turn, comprises a tool, such as fingers and an actuator, such as an electric motor for moving the tool.

A control unit is used for controlling the different movements and functions of the robot, said control unit being capable of controlling the functions oniy aiong determined paths, or it is possible to use different kinds of sensors and/or feedback channels to determine the control information. One typical means of collecting feedback that is used in robot systems is a machine vision system based on one or several cameras, by means of which for example a tool can be directed to a target. In known solutions the accurate location of the articles can be measured on the basis of the measurement information received from the machine vision system. If measurement information is not received from the vision system simultaneously with the processing itself, the real accuracy is often still dependent for instance on the absolute accuracy of the manipulator in use, which absolute accuracy is reduced for example due to wearing. Furthermore, in typical applications a separate camera is necessary in connection with each area to be imaged and the number of the cameras can increase when the number of critical targets is increased.

In known robot tool systems, reliable orientation of a small article within the feeding area is often difficult, expensive and time-consuming, especially when requirements relating to the accuracy of the absolute bearing are within the order of a half a millimetre. In known solutions the feeding device of parts in assembly lines can be provided with a separate machine vision system as well as a system removing an inaccurately orientated article. The machine vision system removes the correctly orientated parts and the removing system removes other parts from a retrieval station.

When the product to be manipulated changes, at least the robot tool system must also be changed to comply with the new product. In known applications for example a gripper that has previously been used, as well as its operating principle and actuators and possibly also the control of the actuators must be replaced entirely. The apparatus easily becomes expensive to build, although in principle, similar kinds of problems have already been solved in connection with the preceding product. In connection with a new product problems are also caused by the gripping force whose control still requires separate actions or systems. The control of the gripping force is especially important when handling easily breakable products.

When it is necessary to arrange several different properties in the same end effector, for example one or several servo-controlled motion axes, a part capable of controlling the handling force, replaceable actuators, replaceable tools and a vision system controlling the functions, the physical size of the end effector implemented in known manners increases so that it becomes unsuitable for a regular production cell. This is typical especially when it is necessary to use large-size actuators.

The large capital costs of assembly lines implemented by means of known solutions as well as the limited flexibility in view of different kinds of products, small batch sizes and versatile functions restrict wide-ranging shift into automatic assembly especially in small or medium-scale production volumes. In known solutions for example the inclusion of different odd form, final assembly and testing functions in the assembly line typically takes place by supplementing the assembly line with successive cells performing a single or a couple of functions at the most. Thus, the costs and the capacity increase rapidly too high for production volumes and manufacturing quantities of small or medium-size companies.

Various attempts have been made to solve the above-described problems. However, known solutions have typically focused on finding a solution to only one problem occurring in a specific situation, and the solutions are not scalable or suitable for several targets. US patent publication 5,219,264 discloses an end effector utilizing a machine vision system, in which a CCD camera and gripping members are placed in the end effector. In said solution the image information transmitted by the camera is positioned by means of separate positioning points (LED lights). It is difficult to adapt the robot tool system according to the publication in different kinds of working environments, and the system also requires special arrangements in the operating environment, such as for example said positioning points in the picking and/or loading area. The robot tool system according to the publication is not very suitable for detecting loose or free form targets either.

The main purpose of the present invention is to disclose a robot tool system which can be easily and automatically adapted for different kinds of environments and which thus increases reusability and reduces the costs of the system as a whole.

To attain this purpose, the robot tool system according to the invention is primarily characterized in what will be presented in the characterizing part of the independent claim 1. The control method of a robot tool system according to the invention, in turn, is primarily characterized in what will be presented in the characterizing part of the independent claim 6. The computer program according to the invention is primarily characterized in what will be presented in the characterizing part of claim 10. The software product according to the invention, in turn, is primarily characterized in what will be presented in the characterizing part of claim 12. The other, dependent claims present some preferred embodiments of the invention.

One robot tool system according to the invention comprises an actuator, a tool changer as well as a machine vision member which are substantially independent as easily replaceable modules. The end effector can be connected to robot arms or simpler manipulators and it can be equipped with various tools. The end effector and the robot arm are controlled by means of machine vision connected to the system. The machine vision member, such as a camera is positioned in the middle of the end effector in such a manner that the actuators and the tool changer are positioned on the sides of the central line of its direction of viewing. In a preferred embodiment the central line of the viewing direction of the camera is also located on the same axis with the last axis of rotation/wrist of the robot. The control is advantageously performed in such a manner that when the different modules change, the control program uses program and hardware parts that are characteristic to said modules and that can be automatically or otherwise rapidly connected.

The robot tool system according to the invention and especially the end effector have an essentially modular structure. The end effector of the system comprises at least a frame, an actuator module and an automatic tool changer, a tool unit and a machine vision member. Furthermore, the robot tool system advantageously comprises an integrated amplifier controller, a PC controller and modular control software.

Advantageously, a camera is positioned on the frame of the end effector with so-called 'eye-in-palm' principle. By placing a small-sized camera in the middle of the end effector, it is possible to utilize the machine vision system to improve the relative or absolute accuracy of the operations irrespective of the operation, and the position of the manipulator and/or tool, because the view of the camera installed in such a way remains substantially unobstructed during the entire work cycle.

In an embodiment of the invention, linear motors are used as actuators functioning as power sources for the tools. In a preferred embodiment the power produced by the linear motors can be set by the user interface so that the grip on the article is reliable and it does not harm the article. Because of the servo-properties of the axes the apparatus is naturally suitable for handling of articles of different sizes. If desired, the control system can also adjust either only the contact force or the combination of the contact force and the position when gripping an article having an unknown size or containing considerable variations in size.

The actuators controlling the motion axes and the sensors used in the feedback coupling of the motion axes are in an embodiment of the invention positioned to another location than in the immediate vicinity of the tool unit, for example to a location where the amplifiers are positioned. The motion of the actuators is transmitted to the tool unit for example hydraulically and the contact forces between the tool unit and the environment are transmitted back to the actuators advantageously via the same route (i.e. hydraulically).

It is possible to position different kinds of tools, such as gripping fingers, a dispenser, a soldering iron, different kinds of cutting and milling tools, a line laser for 3D pattern recognition and different kinds of measurement devices and point probes in the end effector by means of the automatic tool change system. The tools are advantageously coupled to independently servo-controllable linear axes containing modular actuators that can be rapidly replaced according to the needs of various applications. The control of the tools utilizes a machine vision camera that is advantageously coaxial with the wrist of the robot.

In an embodiment of the invention the control software is also modular, and it is possible to provide it with the modules necessary for the control of the tool at a given time. By means of the software structure according to the embodiment it is possible to rapidly and easily determine new functions, positions of the robot and visual objects to the system. Because of its mechanic and programmatic modular coupling interface the system can be connected to a number of different robot arms.

The machine vision arranged according to the invention can be used in various advantageous ways. The invention for instance facilitates the feeding of parts in manipulation of articles by reducing the article orientation requirements preceding the gripping and by recognizing the different articles in their different positions. Furthermore, the attachment and behaviour of the articles can be monitored in real time during the movements. By means of the machine vision member it is possible to ensure the positioning of the end effector and the tools with respect to the article to be manipulated or the environment and the tool. It is also possible to utilize machine vision to inspect an action performed by means of the tools, as well as for other kind of quality control within the working area of the robot. It is also possible to utilize the system for 3D imaging of its environment because of the movable camera. It is possible to perform the 3D imaging of stationary targets either by using features taught accurately from various directions, depth-from-focus method or so-called virtual stereo imaging in which a camera located in the end effector is transferred by means of a robot accurately between imaging actions, and the images are processed as in a conventional stereo method. It is possible to enhance the robot tool system into a stereovision system by supplementing the end effector with a second camera, wherein the system can also be utilized to measure moving objects three-dimensionally. The cameras and the imaging process are automatically synchronized to guarantee real-time measurement results.

The solution according to the invention improves the relative accuracy of robot tool systems and thus compensates the weakening of absolute accuracy resulting from the wearing of the robots. Furthermore, some embodiments of the invention are advantageous for instance in that respect that by means of the machine vision camera it is possible to improve the accuracy of the device irrespective of the tool head, and that because of the centrally positioned vision system, all performed actions can be monitored constantly. In certain situations said solution enables the use of an uncalibrated off-line programmed robot in its production environment. The invention enables the use of one camera with versatile lighting options in several tasks, thus bringing about a saving in costs. It is often necessary to customize a conventional machine vision apparatus to comply with the modified system.

It is possible to adapt the robot tool system for various tasks by changing the tools and software modules. The modular structure according to an embodiment of the invention makes it possible that by changing only the modules that have a substantial effect on a particular feature (actuator module) or function (tool module) of the robot tool system, the device can perform a number of different tasks in the same environment when supported by its generic properties. Known robot tool systems have a limited adaptation capability and often for similar types of tasks, and changes typically require laborious and time-consuming re-arrangements, or it is necessary to acquire a completely new tool with an environment that is suitable for the operation. Because of the mechanical structure and the control structure of the robot tool system according to the invention, the user of the device is not tied to the robot manipulation solutions of one manufacturer. Furthermore, the robot tool system according to the invention can also be used for completely custom-made applications. One embodiment of the robot tool system according to the invention is very small in size, flexible and versatile. The compact structure of one embodiment of the invention as well as its small footprint restrict three-dimensional operations performed in a confined space less than solutions that are built solely of ready-made components, in which the camera is positioned in the end effector.

To apply the invention in assembly applications, it is not necessary to use an expensive cell environment, which is often required together with its manipulators to support manufacturer-specific application solutions. The control structure and the mechanical structure of the robot tool system according to the invention makes it possible to implement a large number of different- functions with the same device. Capital-oriented components remain constantly in use irrespective of the application, wherein the shift from one application to another does not multiply the fixed costs of the apparatus.

In the following, the invention will be described in more detail with reference to the appended skeleton drawings, in which
- Fig. 1: shows the end effector of a robot tool system according to an embodiment of the invention, seen from the direction of the target viewed by a machine vision member,
- Fig. 2: shows the end effector according to Fig. 1 from a direction perpendicular to the viewing direction of the machine vision member and the direction of movement of the tools,
- Fig. 3: shows the end effector according to Fig. 2 when the tools consist of a soldering iron and a tin feeder,
- Fig. 4: shows a cross-section of the end effector according to Fig. 1, when seen from the direction of movement of the tools,
- Fig. 5: shows the end effector of a robot tool system according to a second embodiment of the invention, seen from the direction of the target viewed by a machine vision member,
- Fig. 6: shows the end effector according to Fig. 5 from a direction perpendicular to the viewing direction of the machine vision member and the direction of movement of the tools,
- Fig. 7: shows a cross-section of the end effector according to Fig. 5, when seen from the direction of movement of the tools,
- Fig. 8: shows the end effector positioned in a robot arm, and
- Fig. 9: shows an arrangement of control connections.

For the sake of clarity, the figures only show the details necessary for understanding the invention. The structures and details that are not necessary for understanding the invention but are obvious for anyone skilled in the art have been omitted from the figures to emphasize the characteristics of the invention.

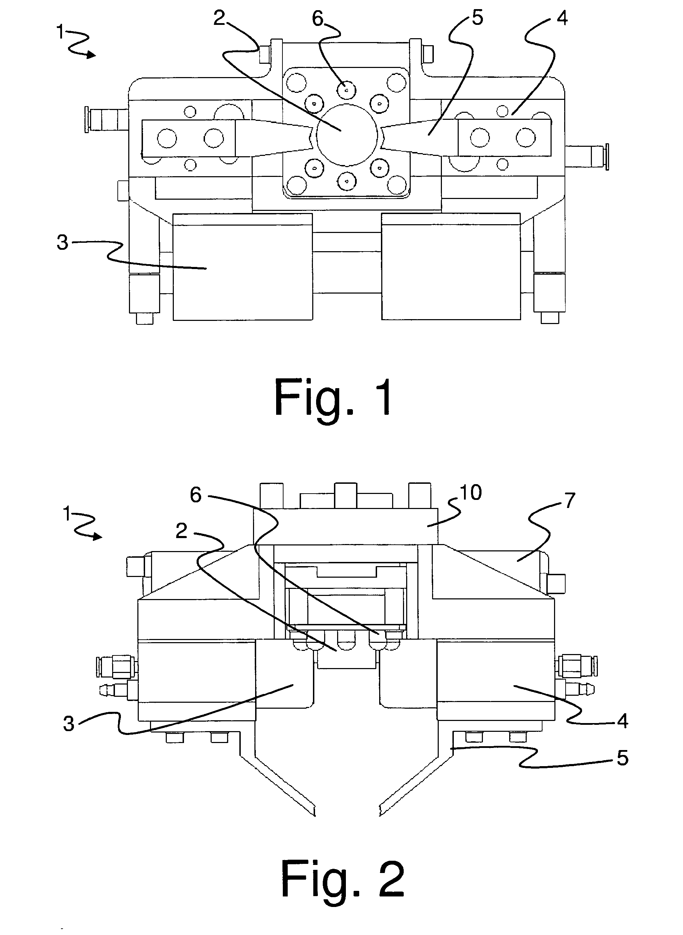

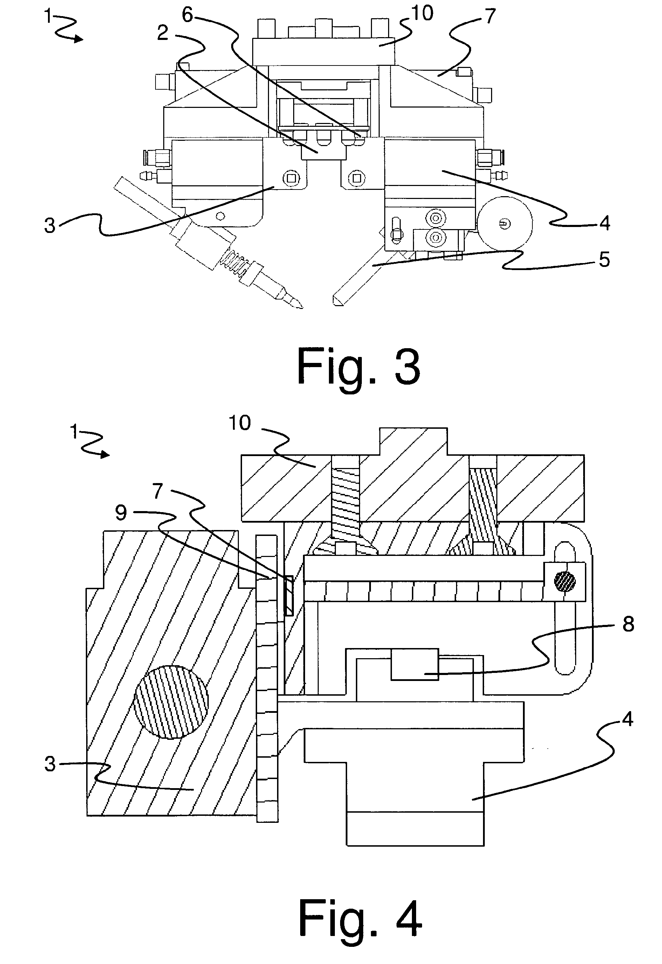

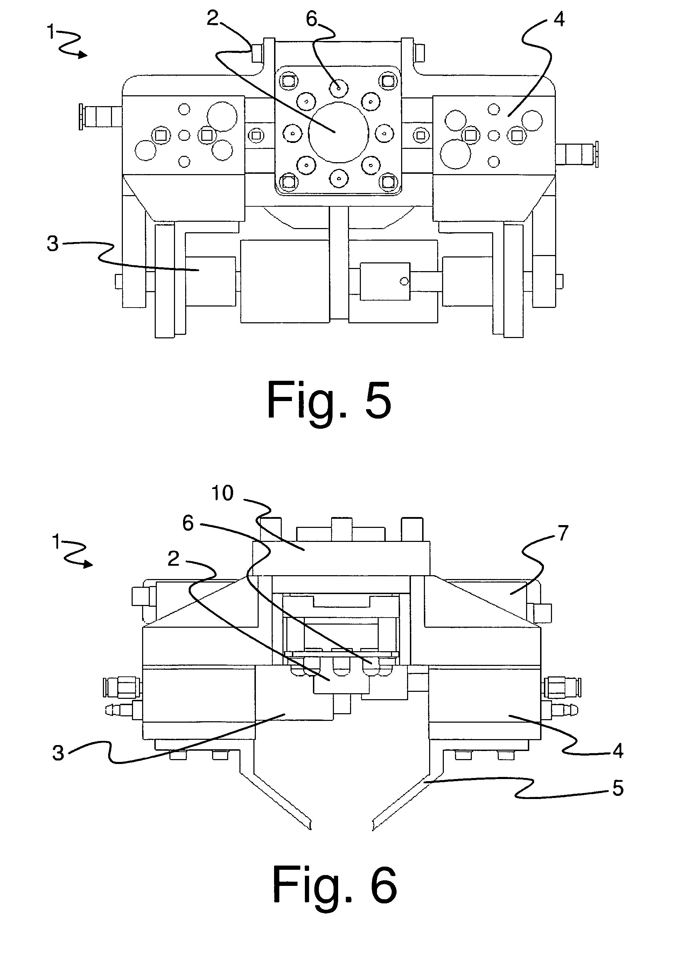

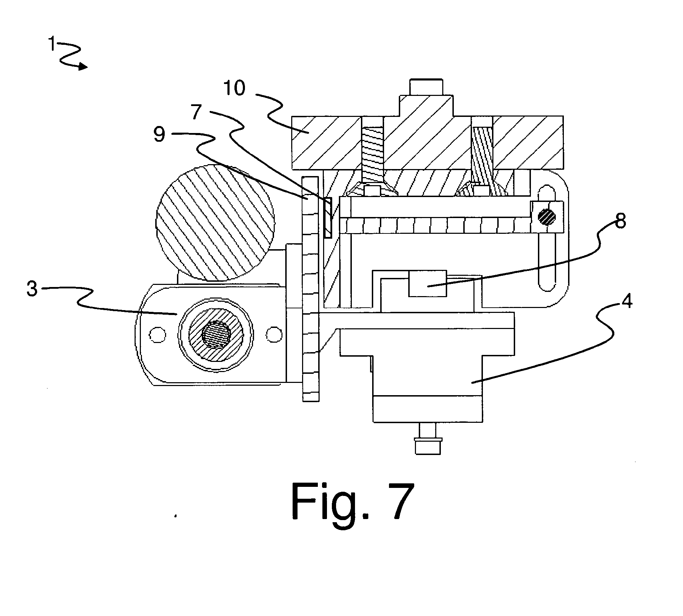

Figs 1, 2, 3 and 4 show a robot tool system according to an embodiment of the invention, and Figs 5, 6 and 7 show a second embodiment of the invention. Figs 1 and 4 show the end effector from a direction at which the machine vision member 2 is looking, i.e. from the direction of the optics of the camera. Figs 2, 3 and 6 show the end effector 1 from a direction perpendicular to the viewing direction of the machine vision member 2 and the direction of movement of the tools 5. Figs 4 and 7, in turn, show the end effector 1 from the moving direction of the tools 5, which direction is perpendicular to the viewing direction of the machine vision member 2.

The robot tool system according to an embodiment of the invention that is shown in Figs 1, 2, 3 and 4 comprises an actuator 3 placed in the end effector 1, a tool changer 4 (i.e. a tool unit) as well as a machine vision member 2, which are substantially independent and easily replaceable modules. Furthermore, the robot tool system advantageously comprises the following members, which are not shown in the figure; an integrated amplifier controller, a PC controller and modular control software. In a preferred embodiment the end effector 1 is attached to the manipulator by means of a connecting flange 10. The connecting flange 10 may have a stationary structure or it may be a replaceable part in the end effector 1. The replaceable connecting flange 10 makes it possible to easily adapt the end effector to various manipulators.

In the embodiment shown in Figs 1, 2, 3 and 4, the actuators 3 are linear motors, but other kinds of actuators can also be used. The main purpose of the actuator 3 is to produce the operating force required by the tools 5, which in said embodiment consists of movement and pressing force. By means of the selection of the actuator 3 it is possible to affect for instance the accuracy and adjustability of movements and forces, as well as the magnitude of movements and forces. On the other hand, by means of the actuator 3 itself it is sometimes possible to measure the contact forces directly. For example in case of linear motors, the current used by the motors complies with the force required for positioning.

Fig. 4 shows that the actuator 3 and the tool changer 4 are attached to the frame only by means of a linear guide 8. In the presented embodiment the position of the tool changer 4 is determined by means of a sensor 7, which in the embodiment according to the figure is placed in the frame, on the wall positioned against the actuator 3. The sensor 7 is arranged to follow the motion produced by the actuator 3 for example by means of a scale formed on the wall structure 9 of the actuator. By placing the sensor 7 in the frame of the end effector 1, it is possible to maintain the sensor 7, although the other modules of the terminal are changed.

The tool changer 4 is a mechanical device that enables the use of several tools 5 in the same robot. In a preferred embodiment the tool changer 4 comprises simultaneously operating, electric, mechanical, hydraulic and pneumatic couplings.

It is possible to position different kinds of tools 5, such as gripping fingers, a dispenser, a soldering iron, different kinds of cutting and milling tools, a line laser for 3D pattern recognition and different kinds of measurement devices in the end effector 1 by means of the automatic tool change system. In Fig. 2 the tools 5 consist of gripping fingers and in Fig. 3 of a soldering iron and a tin feeder. Different kinds of tools 5 make it possible to use the end effector 1 for various kinds of tasks, for example for welding, painting (surface treatment), grinding, cutting, assembling, packing (and placing on a platform), palleting, storing, transfer of articles, working, serving the working machines, pattern recognition, soldering, glueing, dispensing, measuring, placing electrical and mechanical measuring inserts in their position.

The tools 5 are locked in the device advantageously according to the requirements of the size class and the requirements of the task by means of a pneumatic, hydraulic or electric actuator that is located in the frame side part of the tool change unit 4. The connecting interface of the unit on the tool side 5 is standardized so that it contains several attachment point alternatives for the attachment of the actual tool. This makes it possible to replace the part belonging to the change unit 4 or to attach it to another tool, as well as to replace it with a new one without replacing the entire tool. In an embodiment of the actuator locking the tools, the tools remain locked even if the operating force of the actuator suddenly changes. The locking of the tool 5 can be monitored by means of the camera 2 of the device or a separate sensor.

Several pneumatic and hydraulic ducts are passed through the interface of the tool changer 4 to the actual tool 5. After the tool change it is possible to adjust the level and type of the operating forces by means of the control system to comply with the needs of different tools 5. If necessary, the ducts in the interface can be arranged again electrically and mechanically with respect to the type, order and number, when the system is modified for a new tool 5. Because of their modular nature the mounting elements of the ducts can also be replaced, if necessary, to comply with the couplings of the tool 5 required in the application.

In an embodiment the tool 5 is kepi in a tool rack, from which the device can automatically and independently change and attach another tool that is ready for use. The features of the tool rack and the machine vision 2 of the device can be utilized in order to ensure accurate positioning in connection with the process of leaving the tool 5 in the rack and retrieving the tool. By means of the machine vision 2 it is also possible to ensure a successful change operation.

The machine vision member 2, such as a camera is positioned in the middle of the end effector 1 in such a manner that the actuators 3 and the tool changers 4 are positioned on the sides of the central line of its direction of viewing. The operation of the system, such as movement, speed and/or force is controlled on the basis of the machine vision 2. The control is advantageously implemented in such a manner that when different modules change, the program uses program parts characteristic to said modules.

Figs 1, 2, 3 and 4 also show the illumination structures 6, such as LEDs placed around the optics of the camera 2 in this embodiment. It is advantageous to select the illumination structure in such a manner that the illumination it produces corresponds to the properties of the machine vision system 2 as well as possible. For example in connection with certain CCD cameras it is advisable to use IR lighting. It is also advantageous to implement the illumination in such a manner that the system is capable of controlling not only the illumination structure 6 of the terminal 1, but also other illumination arrangements, such as stationary illumination structures within the tool area.

Figs 5, 6 and 7, in turn, show another embodiment of the invention. In the presented embodiment, the actuators 3 are rotating motors, but it is also possible to use other kinds of actuators, as mentioned above. In addition to various electric motors, possible alternatives as an actuator 3 include for example different kinds of hydraulic and pneumatic motors and actuators. In addition to the desired speed, force and torque properties, the selection of the actuator 3 is influenced for example by the environment of the robot and the requirements it entails (such as explosion proof rooms and clean rooms).

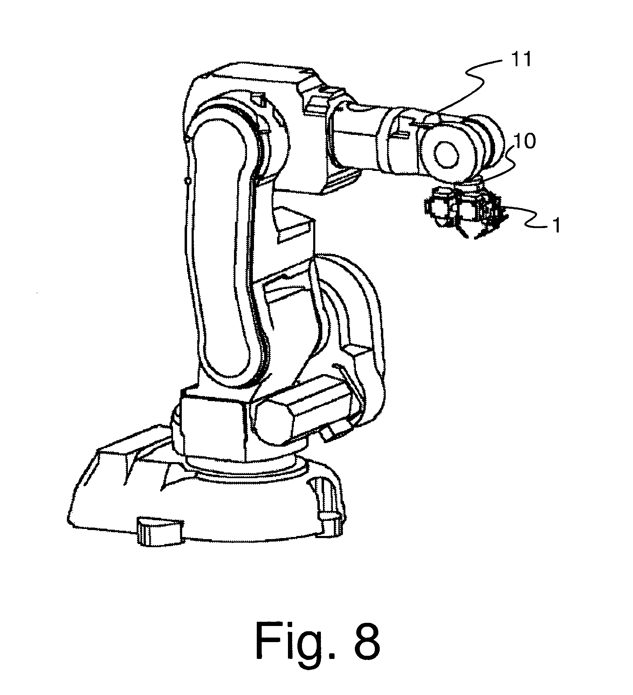

Fig. 8 shows the end effector 1 attached to the arm 11 of a robot in connection with a robot having rotating joints, i.e. an arm robot. Said robot type provides various degrees of freedom, advantageously even six degrees of freedom because of the arm and wrist structure 11.

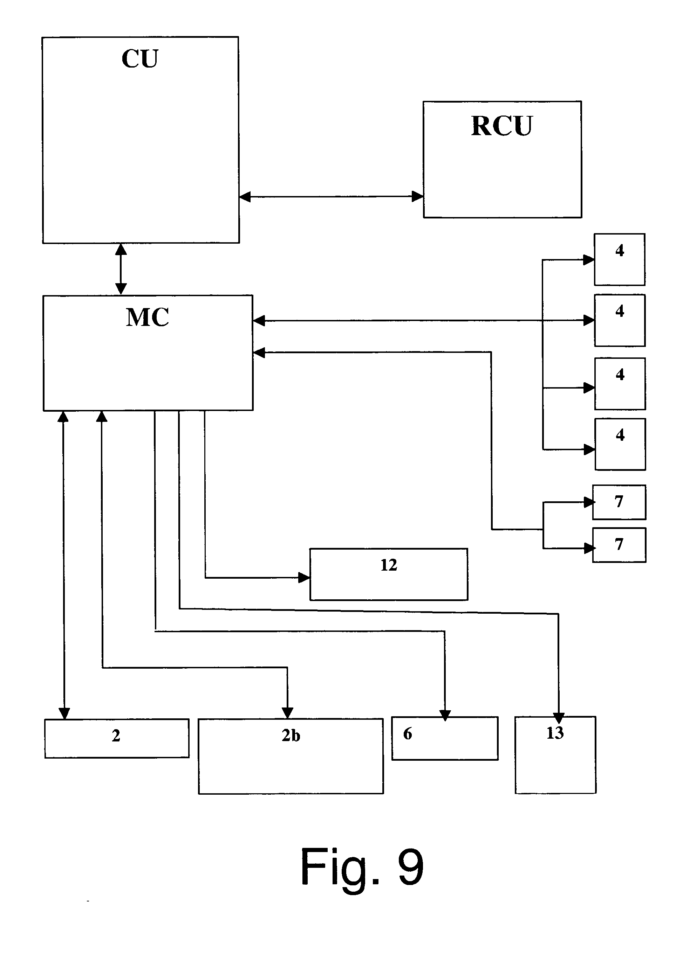

Fig. 9 shows schematically an advantageous arrangement of the control connections of the tool system. In said embodiment the controller RCU of the robot arm 11 is connected to the controller CU of the end effector by means of a program. Said connection may be implemented in various ways, for example by means of an ethernet connection. The controller CU of the end effector, in turn, is connected to a motion controller MC. The motion controller MC, in turn, communicates with other parts of the system, such as the actuators 4, the sensors 7, the valves 12, the machine vision member 2 and the illumination structure 6. The system may also contain several machine vision members 2b. Often there are also other couplings 13, such as a power supply of the tool 5, sensor couplings, etc.

The controlled connection of the end effector 1 to the controller RCU of the robot arm 11 according to the invention is as light in weight as possible, and in a preferred embodiment it is not programmatically integrated in the controller of the robot arm. In a preferred embodiment the controller CU of the end effector only remotely activates entire programs programmed in the controller RCU of the robot, and orders to move the arm 11 by giving short relative motion commands. The structure enables the use of different kinds of robots advantageously by changing only one small programmatic interface module. Longer orbital movements of the arm 11 that require coordinated movement of several joints of the arm of the robot utilize the control system RCU of the robot itself as well as the developed program structure. Separate motion program is built for each such movement, said program being stored separately in the controller RCU of the robot arm 11 and activated by means of the controller CU of the end effector. Thus, it is possible to utilize motion control developed and optimized especially for the arm 11 of the robot.

However, the positioning movements that improve the accuracy utilize relative motion functions of the robot arm 11, which motion functions are implemented as separate commands given by the controller CU of the end effector on the basis of the positioning information received from the machine vision camera 2. For example the positioning of the gripper 5 for the purpose of gripping an article takes place as a few times repeated 'retrieval - position correction - more specific retrieval' cycle, if necessary, in which cycle the position of the robot is merely corrected by relative motion commands determined by the information measured with the vision member by means of the camera 2. When required by the task and functionality, the system CU can also produce larger programmatic elements for the controller RCU of the robot in a way understood by the controller, which elements, in turn, can be activated remotely from the controller CU.

In known robot manipulators the entire gripper is replaced, including the actuators and sensors belonging thereto. In the robot tool system according to the invention, only the tool 5 or the actuator 3 moving the tool is replaced in accordance with the manipulation task. In some cases the tool change unit 4, the tool 5 and/or the actuator 3 can be replaced. The basic frame of the robot tool system as well as the guides 8 and sensors 7 located therein remain the same all the time.

For the calibration of the vision functions of the robot tool system according to the invention it is possible to use known calibration methods, or the following advantageous calibration method of vision functions, which is suitable especially for calibration of stereo vision functions.

The stereovision functions of the robot tool system according to the invention are calibrated by imaging a stationary calibration piece that can be either planar or three-dimensional from several directions, advantageously at least from five directions. For example the following actions are taken in each imaging point:
a) A first image is taken by means of the camera 2, said image corresponding to the image of the "first camera" of the stationarily implemented stereo vision system
b) Current position data is inquired from the robot
c) The camera 2 is moved by means of the robot relatively with respect to the current position a distance determined by a vector v
d) A second image is taken by means of the camera 2, said image corresponding to the image of the "second camera" of the stationarily implemented stereo vision system

The same features suitable for calibration are searched from all the obtained image pairs. The locations of the features used for calibration must be known in the global system of coordinates. The calibration produces the intrinsic parameters of the camera 2 as well as extrinsic parameters for stereo imaging utilizing two camera locations, in which the relative transition of the camera locations is v.

It is also possible to use the end effector 1 according to the invention in various ways by utilizing machine vision. In the following some preferred embodiments are described.

In one embodiment the end effector 1 is used for measuring the shapes of the objects that contain three-dimensional characteristics by means of a laser line tool. Thus, the laser tool is arranged as one tool 5 of the terminal 1. The measurement is based on the triangulation principle, in which the target is illuminated with a laser light source from a first direction, and the camera 2 observes the location of the reflected beam from a second direction. When the distance of the target from the laser source - camera combination varies, the location of the reflected beam also changes in the image of the camera 2. The angle between the laser source and the camera 2 remains constant in the measurement, but the distance therebetween may vary according to the measurement situation.

The above-presented embodiment is capable of measuring the distance of only one point. It is possible to enhance the method in such a manner that line generator optics is positioned in front of the laser light source, said optics expanding the beam into a wide line. Thus, the laser must be oriented in such a manner that when the surface of a target is illuminated from a fixed distance, the line drawn by the laser is perpendicular to the direction of the optics of the camera 2 and the direction of the original laser beam. Thus, by illuminating with a line laser, it is possible to bring forth the shape of the cross-section of the target at one point. By using a band-pass filter set in the wavelength of the laser in front of the camera 2, or by arranging the laser used for illumination to have a considerably higher intensity when compared to the illumination of the environment, the camera 2 only observes the shape of the cross-section illuminated by the laser, and it is possible to calculate the distances to all the points of the cross-section. By moving the laser beam - camera combination, i.e. in practice the end effector 1, across the target or by changing the orientation of the laser with respect to the camera 2, it is possible to determine the position of the illuminated cross-section freely on the surface of the target. Thus, it is also possible to calculate the distances to any part of the target.

In the end effector 1 according to the invention, the measurement of three-dimensional surface shapes of the target may take place for example in the following manner:
a) One of the tools 5 of the end effector 1 is replaced with a laser line tool
b) The end effector 1 is transferred above the target to be measured in such a manner that the target is positioned as well as possible in the field of vision of the camera 2
c) The position of the axis moving the laser line tool is stored in a memory, and an image is taken by means of the camera 2
d) The location of the laser line is searched from the image of the camera 2 (for example the brightest pixel on a row or in a column)
e) Distances to the points illuminated by the laser line are calculated. The x-coordinates of the points are obtained on the basis of the axis moving the laser line tool, the y and x coordinates are obtained by means of triangulation principle (from the coordinate of the image of the camera 2 in directions u and v, the focal distance of the camera and the distance between the camera and the laser line tool)
f) The laser line tool is transferred a step dₓ along its own axis
g) The process continues from point c, and it is repeated so many times it is necessary to take the steps dₓ to have the entire target or a part of interest thereof measured.

If the entire target does not fit into the image area of the camera 2 to be measured at a time, the steps a to g are performed first for one part of the target, whereafter the end effector 1 is transferred aside on top of the target within a distance corresponding to the image area of the camera 2, and the measurement is repeated. Thus, it is also necessary to take into account the change in the location of the robot carrying the end effector 1 in the measurement results.

The three-dimensional measurement of the position and shape of the article may be performed by viewing the article from different directions. In an embodiment it is possible to utilize the end effector 1 according to the invention to obtain stereo images from stationary targets with one camera 2 in the following way:
a) A first image is taken by means of the camera 2, said picture corresponding to the image of the "first camera" of the stationarily implemented stereo vision system
b) Current position data of the camera 2 is requested from the robot
c) The camera 2 is moved by means of the robot relatively with respect to the current position for a distance determined by vector v
d) A second image is taken by means of the camera 2, said image corresponding to the image of the "second camera" of the stationarily implemented stereo vision system

By means of conventional stereovision methods it is possible to determine from the obtained image pair the correlation on different sides of the image, and the result is a "cloud of dots". The cloud of dots can be used as such to produce a three-dimensional image of the target for the user. It is also possible to use an adaptation method to adapt the previously taught three-dimensional model of the target to the measurement information, thus determining the location and orientation of the target.

The central aspect of the above-mentioned method is to calibrate one camera 2 and the constant relative transition v used between the views of the "first camera" and the "second camera" so that conventional stereovision methods can be utilized.

The embodiment described next is the measurement of three-dimensional position based on the changes in the edge shapes of the target to be manipulated. If sufficient contrast between the background and the target to be manipulated can be arranged for example by means of background illumination so that the target and its background can be easily distinguished from each other and the target is not symmetrical with respect to all its axes, the position of the target (rotation around axes X, Y, Z) can be measured three-dimensionally only by examining the shapes of its edges. In the method the process begins by separating the edge shape of the target from the image. At the next stage it is possible to calculate the centre of mass of the edge shapes in the X and Y direction by means of known formulas. Then the signature of the edge shape is generated by means of points belonging to the edge and the centre of mass by calculating the distances from the centre of mass to each point on the edge. The calculation can be performed by using known formulae.

When teaching the shapes of the edges of the target, the camera 2 is moved above the target in such a manner that the camera 2 views the target within a fixed distance, but from different directions at intervals of constant angles, measured around the axes X and Y. The camera 2 steps through all angle alternatives and forms the signature of the edge characteristic of the target at every step. The signatures are stored in the memory of a computer.

When the position of the target is measured, the camera is located in a random position above the target. The signature of the target is formed in the manner disclosed in the above-described manner and it is compared to the signatures stored in the memory one at a time. The distances of a signature taken from an unknown direction are each multiplied with a coefficient, so that the imaging distance would not affect the result of comparison. An error value is obtained for each comparison. The signature in the memory, for which the smallest error value is obtained when used as an object of comparison, is the result of the retrieval, and it is concluded that the camera 2 is located in the direction thereby indicated. When a more accurate result of direction measurement is required, it is possible to perform interpolation between the neighbours of the signature that has produced the smallest error value.

In a preferred embodiment the machine vision 2 is utilized to monitor how the gripping fingers 5 maintain their grip. The manipulated target that is locked between the gripping fingers 5 can be monitored during the manipulation by means of the camera 2, so that the position of the target does not change between the gripping fingers during the manipulation. The method is based on the comparison on images taken before and after the manipulation in the following manner.

When the target has been taken in a grip, but it has not been moved yet, a series of images is taken with the camera 2, and a deviation model is calculated for the area indicated in the image. In the deviation model, an average grey scale value of all the pixels in the image is stored in the memory together with the pixel-specific average values and deviations of the grey scale values in the series of images.

When the target has been moved, and the aim is to check whether the target has moved between the gripping fingers 5, one image is taken with the camera 2, and an average grey scale value of all its pixels is calculated. The grey scale values of all the pixels in the new image are multiplied with a coefficient (that corresponds to the ratio of the average grey scale value of the initial situation to the average grey scale value of the now obtained image), so that the average variation in the illumination would not have an effect therein.

Thereafter the area to be treated in the image is processed and the number of such pixels in which- the corrected grey scale value of the new image deviates from the average value of the deviation model more than the deviation multiplied with the safety coefficient. By means of the safety coefficient it is possible to determine how small changes are detected in the comparison. If the ratio describing the number of deviating pixels increases too high, it is possible to determine that the position of the target to be manipulated between the gripping fingers 5 has changed substantially, and the operation can be interrupted before the erroneous position of the target causes a malfunction.

According to one embodiment, the invention can also be used for recognizing free space on different sides of the article in order to control the gripping fingers 5. When gripping freely positioned articles with the gripping fingers 5, it is advantageous to use the camera 2 to ensure that there is room for the gripping fingers at the gripping points around the article to be gripped. When the desired gripping direction is determined on the basis of the image, examination areas extending outward from the outer edges of the target are positioned on the image area. The examination areas can be examined for example by means of grey scale histograms in such a manner that if both areas have a sufficiently similar histogram, and they, in turn, deviate sufficiently from the histogram of the part of the image between the areas (in which the target to be manipulated is located), it can be said that the background can be seen on both sides of the target, and the gripping fingers 5 can be positioned in these points.

The camera 2 of the end effector 1 according to the invention can be used in accordance with another embodiment to check any target within the working area of the robot for example to check the quality of the target. The finished assembly can be for example compared with a stored reference to check a particular characteristic, such as perpendicularity or position. It is possible to compare a certain characteristic of a part to the taught reference point before the assembly, and if the characteristic does not correspond to the reference, the article is taken aside as a downgraded article. When a line laser or stereo imaging is used as a tool 5, it is possible to obtain three-dimensional measurement information of the article for the purpose of different quality assurance operations.

The relative position of the article that is the object of the operation and the tool of the robot is an essential factor in view of the final result. In an embodiment of the invention it is possible to compensate insufficient accuracy of the manipulator by means of the camera 2 of the end effector by performing the 'retrieval of the target - deviation of the tool 5 from the desired target - realignment' operations until the desired positioning has been attained with the determined accuracy. The retrieved target is taught beforehand by means of a simple graphic addressing method. In some cases the tool 5 can also be the desired target, for example when a taught characteristic of the mounting location is compared to a taught characteristic of the tool 5 in use. In another example, a characteristic of an article retrieved by means of the gripping fingers 5 can be compared to a characteristic of the mounting location, with the aim of aligning them with each other for successful mounting.

In the examples described hereinabove, the end effector 1 is shown in connection with a robot having rotating joints, i.e. an arm robot. Said robot type provides various degrees of freedom because of the arm and wrist structure, which brings forth the advantages of the robot tool system according to the invention quite well. It is possible to apply the robot tool system according to the invention also in connection with other kinds of robot models. The type of the basic structure of the robot can be for example SCARA (Selective Compliance Assembly Robot Arm) a portal robot or a carthesian robot. Uniaxial manipulators are also possible. The replaceable connecting flange shown in a preferred embodiment of the invention makes it possible to adapt the end effector 1 easily to different kinds of manipulators, often by merely changing said connecting flange.

By combining, in various ways, the modes and structures disclosed in connection with the different embodiments of the invention presented above, it is possible to produce various embodiments of the invention , therefore, the above-presented examples must not be interpreted as restrictive to the invention, but the embodiments of the invention may be freely varied within the scope of the inventive features as defined in the claims hereinbelow.

## Claims

1. A robot tool system intended to be connected to an arm (11) of a robot, said system comprising at least
- one tool (5),
- an actuator (3) for placing the tool in a use position,
- a machine vision member (2) with the viewing direction and outlook to the working area of the tool (5), said machine vision member being arranged to control the movement and function of the tool,
**characterized in that** the tool is a replacable tool (5) and **in that** the system also comprises a tool change unit (4) which can be moved by means of the actuator (3) and which can be provided with the replaceable tool (5), and the tool change unit (4) and the actuator (3) are positioned around the viewing direction of the machine vision member (2), wherein the view of the machine vision member is substantially unobstructed, irrespective of the replacable tool (5) or the task and wherein the machine vision member (2) is used for controlling the change of the replacable tool (5) during use of the system.

2. The robot tool system according to claim 1, **characterized in that** the tool change unit (4), the actuator (3) and the machine vision member (2) are independent modules that are connected to each other by means of standardized interfaces, and one single module can be replaced without detaching the other modules.

3. The robot tool system according to claim 1 or 2, **characterized in that** the replacable tool (5) is one of the following: gripping fingers, a dispenser, a soldering iron, a cutting tool, a milling tool, a laser, a measurement device, a vacuum gripper, a tin feeder, a measuring insert, a testing insert.

4. The robot tool system according to any of the preceding claims, **characterized in that** the robot tool system also comprises a guide (8) and a sensor (7) which are arranged to remain unaltered when the replacable tool (5) or the actuator (3) is replaced.

5. The robot tool system according to any of the preceding claims,
**characterized in that** the robot tool system also comprises an amplifier controller, a controller and modular control software.

6. A control method for a robot tool system, which robot tool system is intended to be connected to an arm (11) of a robot, said robot tool system comprising at least
- one tool (5).
- an actuator (3) for placing the tool (5) in a use position,
- a machine vision member (2) with the viewing direction and out-look to the working area of the tool (5), said machine vision member being arranged to control the movement and function of the tool,
**characterized in that** the tool is a replacable tool (5) and **in that** the system also comprises a tool change unit (4) which can be moved by means of the actuator (3) and which can be provided with the replaceable tool (5), and the tool change unit (4) and the actuator (3) are positioned around the viewing direction of the machine vision member (2), and the replacable tool (5) to be used for the work task is changed in the tool change unit and the machine vision member is used for controlling the change of the replacable tool (5).

7. The control method according to claim 6, **characterized in that** the machine vision member (2) is used for aligning replacable tools (5) and the articles to be manipulated with the environment, as well as for recognizing, measuring and comparing the articles and the environment.

8. The control method according to claim 6, **characterized in that** the machine vision member (2) is used for controlling the assembly and for quality control.

9. The control method according to any of the claims 6 to 8, **characterized in that** the robot tool system is used for at least one of the following: welding, painting (surface treatment), grinding, cutting, assembling, packing (and placing on a platform), palleting, storing, transfer of articles, working, serving of working machines, pattern recognition, soldering, glueing, dispensing, measuring, placing measuring inserts in their position.

10. A computer program (CU, MC) comprising a group of program commands for controlling a robot tool system, which robot tool system is intended to be connected to an arm (11) of a robot, said robot tool system comprising at least
- one tool (5),
- an actuator (3) for placing the tool (5) in a use position,
- a machine vision member (2) with the viewing direction and outlook to the working area of the tool (5), said machine vision member being arranged to control the movement and function of the tool (5),
and the program comprises program commands for processing an image imaged by the machine vision member (2) and for controlling the actuator (3) and the tools (5),
**characterized in that** the tool is a replacable tool (5) and is that the system also comprises a tool change unit (4) which can be moved by means of the actuator (3) and which can be provided with the replaceable tool (5), and the tool change unit (4) and the actuator (3) are positioned around the viewing direction of the machine vision member (2), and
the program (CU, MC) also comprises program commands for
- changing the replacable tool (5) in the tool change unit (4), and
- controlling the changing of the replacable tool (5) on the basis of the information obtained from the machine vision member (2).

11. The program according to claim 10, **characterized in that** the robot tool system is connected to a robot that comprises a robot controller (RCU), wherein the program (CU, MC) also comprises program commands for communication with the robot controller (RCU).

## Patentansprüche

1. Roboter-Werkzeugsystem, das zur Verbindung mit einem Arm (11) eines Roboters vorgesehen ist, wobei das System zumindest Folgendes umfasst:
- ein Werkzeug (5),
- einen Aktor (3) zum Platzieren des Werkzeugs in einer Gebrauchsposition,
- ein Element zum maschinellen Sehen (2), dessen Blickrichtung und Ausblick auf den Arbeitsbereich des Werkzeugs (5) gerichtet sind, wobei das Element zum maschinellen Sehen angeordnet ist, um die Bewegung und Funktion des Werkzeugs zu steuern,
**dadurch gekennzeichnet,**
**dass** es sich bei dem Werkzeug um ein austauschbares Werkzeug (5) handelt, und dass das System ferner eine Werkzeug-Austauscheinrichtung (4) umfasst, die durch den Aktor (3) bewegt werden kann und die mit dem austauschbaren Werkzeug (5) versehen werden kann, und dass die Werkzeug-Austauscheinrichtung (4) und der Aktor (3) beidseitig der Blickrichtung des Elements zum maschinellen Sehen (2) angeordnet sind, wobei die Sicht des Elements zum maschinellen Sehen ungeachtet des austauschbaren Werkzeugs (5) oder der Aufgabe im Wesentlichen nicht behindert wird, und wobei das Element zum maschinellen Sehen (2) zum Steuern des Austauschs des austauschbaren Werkzeugs (5) während der Verwendung des Systems eingesetzt wird.

2. Roboter-Werkzeugsystem nach Anspruch 1,
**dadurch gekennzeichnet,**
**dass** die Werkzeug-Austauscheinrichtung (4), der Aktor (3) und das Element zum maschinellen Sehen (2) unabhängige Bauteile sind, die durch standardisierte Anschlüsse miteinander verbunden sind, und dass ein einzelnes Bauteil ohne Ablösen der anderen Bauteile ersetzbar ist.

3. Roboter-Werkzeugsystem nach Anspruch 1 oder 2,
**dadurch gekennzeichnet,**
**dass** es sich bei dem austauschbaren Werkzeug (5) um eines der folgenden Werkzeuge handelt: Greiffinger, Dispenser, Lötkolben, Schneidwerkzeug, Fräswerkzeug, Laser, Messeinrichtung, Vakuumgreifer, Zinn-Zuführeinrichtung, Messeinsatz, Prüfeinsatz.

4. Roboter-Werkzeugsystem nach einem der vorangehenden Ansprüche,
**dadurch gekennzeichnet,**
**dass** das Roboter-Werkzeugsystem ferner eine Führung (8) und einen Sensor (7) umfasst, die so angeordnet sind, dass sie beim Austausch des austauschbaren Werkzeug (5) oder des Aktors (3) unverändert bleiben.

5. Roboter-Werkzeugsystem nach einem der vorangehenden Ansprüche,
**dadurch gekennzeichnet,**
**dass** das Roboter-Werkzeugsystem zudem eine Verstärkersteuerung, eine Steuereinheit und modulare Steuerungssoftware umfasst.

6. Steuerungsverfahren für ein Roboter-Werkzeugsystem, wobei das Roboter-Werkzeugsystem zur Verbindung mit einem Arm (11) eines Roboters vorgesehen ist, und wobei das Roboter-Werkzeugsystem zumindest Folgendes umfasst:
- ein Werkzeug (5),
- einen Aktor (3) zum Platzieren des Werkzeugs (5) in einer Gebrauchsposition,
- ein Element zum maschinellen Sehen (2), dessen Blickrichtung und Ausblick auf den Arbeitsbereich des Werkzeugs (5) gerichtet sind, wobei das Element zum maschinellen Sehen angeordnet ist, um die Bewegung und Funktion des Werkzeugs zu steuern,
**dadurch gekennzeichnet,**
**dass** es sich bei dem Werkzeug um ein austauschbares Werkzeug (5) handelt, und dass das System ferner eine Werkzeug-Austauscheinrichtung (4) umfasst, die durch den Aktor (3) bewegt werden kann, und die mit dem austauschbaren Werkzeug (5) versehen werden kann, und dass die Werkzeug-Austauscheinrichtung (4) und der Aktor (3) beidseitig der Blickrichtung des Elements zum maschinellen Sehen (2) angeordnet sind, und dass das für die Bearbeitungsfunktion einzusetzende austauschbare Werkzeug (5) in der Werkzeug-Austauscheinrichtung ausgetauscht wird, und das Element zum maschinellen Sehen zum Steuern des Austauschs des austauschbaren Werkzeugs (5) eingesetzt wird.

7. Steuerungsverfahren nach Anspruch 6,
**dadurch gekennzeichnet,**
**dass** das Element zum maschinellen Sehen (2) zum Ausrichten austauschbarer Werkzeuge (5) und der zu handhabenden Gegenstände auf die Umgebungsbedingungen, sowie zur Erkennung, Messung und zum Vergleichen der Gegenstände mit den Umgebungsbedingungen verwendet wird.

8. Steuerungsverfahren nach Anspruch 6,
**dadurch gekennzeichnet,**
**dass** das Element zum maschinellen Sehen (2) zum Steuern der Fertigung und zur Qualitätskontrolle eingesetzt wird.

9. Steuerungsverfahren nach einem der Ansprüche 6 bis 8,
**dadurch gekennzeichnet,**
**dass** das Roboter-Werkzeugsystem für zumindest eines der folgenden Verfahren eingesetzt wird: Schweißen, Lackieren (Oberflächenbehandlung), Schleifen, Schneiden, Zusammenbau, Verpacken (und Platzieren auf einer Plattform), Pallettieren, Ablegen, Überführen von Gegenständen, Bearbeiten, Bestücken von Bearbeitungsmaschinen, Mustererkennung, Löten, Verkleben, Ausgabe, Messung, Platzieren von Messeinsätzen in ihrer Position.

10. Computerprogramm (CU, MC) umfassend eine Gruppe von Programmbefehlen zum Steuern eines Roboter-Werkzeugsystems, wobei das Roboter-Werkzeugsystem zur Verbindung mit einem Arm (11) eines Roboters vorgesehen ist, wobei das Roboter-Werkzeugsystem zumindest Folgendes umfasst:
- ein Werkzeug (5),
- einen Aktor (3) zum Platzieren des Werkzeugs (5) in einer Gebrauchsposition,
- ein Element zum maschinellen Sehen (2), dessen Blickrichtung und Ausblick auf den Arbeitsbereich des Werkzeugs (5) gerichtet sind, wobei das Element zum maschinellen Sehen angeordnet ist, um die Bewegung und Funktion des Werkzeugs (5) zu überwachen,
und wobei das Programm Programmbefehle zum Verarbeiten eines Bildes, das durch das Element zum maschinellen Sehen (2) abgebildet wird, und zum Steuern des Aktors (3) und des Werkzeugs (5) umfasst,
**dadurch gekennzeichnet,**
**dass** es sich bei dem Werkzeug um ein austauschbares Werkzeug (5) handelt, und dass das System ferner eine Werkzeug-Austauscheinrichtung (4) umfasst, die durch den Aktor (3) bewegt werden kann und die mit dem austauschbaren Werkzeug (5) versehen werden kann, dass die Werkzeug-Austauscheinrichtung (4) und der Aktor (3) beidseitig der Blickrichtung des Elements zum maschinellen Sehen (2) angeordnet sind, und dass das Programm (CU, MC) ferner Programmbefehle zum
- Austauschen des austauschbaren Werkzeugs (5) in der Werkzeug-Austauscheinrichtung (4) und zum
- Steuern des Austauschs des austauschbaren Werkzeugs (5) auf der Grundlage der Informationen, die durch das Element zum maschinellen Sehen (2) gewonnen werden, umfasst.

11. Programm nach Anspruch 10,
**dadurch gekennzeichnet,**
**dass** das Roboter-Werkzeugsystem mit einem Roboter verbunden ist, der eine Roboter-Steuereinheit (RCU) umfasst, und dass das Programm (CU, MC) zudem Programmbefehle zur Kommunikation mit der Roboter-Steuereinheit (RCU) umfasst.

## Revendications

1. Système d'outil robotique destiné à être relié à un bras (11) d'un robot, ledit système comprenant au moins
- un outil (5),
- un actionneur (3) destiné à placer l'outil dans une position d'utilisation,
- un élément de vision robotique (2) ayant une direction et une perspective de visée vers la zone de travail de l'outil (5), ledit élément de vision robotique étant prévu afin de contrôler le mouvement et le fonctionnement de l'outil,
**caractérisé en ce que** l'outil est un outil remplaçable (5) et **en ce que** le système comprend également une unité de changement d'outil (4) qui peut être déplacée à l'aide de l'actionneur (3) et qui peut être munie de l'outil remplaçable (5), et l'unité de changement d'outil (4) et l'actionneur (3) sont positionnés autour de la direction de visée de l'élément de vision robotique (2), dans lequel la vision de l'élément de vision robotique est sensiblement non entravée, quel que soit l'outil remplaçable (5) ou la tâche, et dans lequel l'élément de vision robotique (2) est utilisé afin de contrôler le changement de l'outil remplaçable (5) pendant l'utilisation du système.

2. Système d'outil robotique selon la revendication 1, **caractérisé en ce que** l'unité de changement d'outil (4), l'actionneur (3) et l'élément de vision robotique (2) sont des modules indépendants qui sont reliés les uns aux autres à l'aide d'interfaces standardisées, et un seul module peut être remplacé sans détacher les autres modules.

3. Système d'outil robotique selon la revendication 1 ou 2, **caractérisé en ce que** l'outil remplaçable (5) est l'un de ce qui suit : des pinces de serrage, un distributeur, un fer à souder, un outil de découpe, un outil de meulage, un laser, un dispositif de mesure, une pince à vide, un dispositif d'alimentation en étain, un insert de mesure, un insert de test.

4. Système d'outil robotique selon l'une quelconque des revendications précédentes, **caractérisé en ce que** le système d'outil robotique comprend également un guide (8) et un capteur (7) qui sont prévus afin de rester inchangés lorsque l'outil remplaçable (5) ou l'actionneur (3) est remplacé.

5. Système d'outil robotique selon l'une quelconque des revendications précédentes, **caractérisé en ce que** le système d'outil robotique comprend également un contrôleur d'amplificateur, un contrôleur et un logiciel de commande modulaire.

6. Procédé de commande destiné à un système d'outil robotique, ledit système d'outil robotique étant destiné à être relié à un bras (11) d'un robot, ledit système d'outil robotique comprenant au moins
- un outil (5),
- un actionneur (3) destiné à placer l'outil (5) dans une position d'utilisation,
- un élément de vision robotique (2) ayant une direction et une perspective de visée vers la zone de travail de l'outil (5), ledit élément de vision robotique étant prévu afin de contrôler le mouvement et le fonctionnement de l'outil,
**caractérisé en ce que** l'outil est un outil remplaçable (5) et **en ce que** le système comprend également une unité de changement d'outil (4) qui peut être déplacée à l'aide de l'actionneur (3) et qui peut être munie de l'outil remplaçable (5), et l'unité de changement d'outil (4) et l'actionneur (3) sont positionnés autour de la direction de visée de l'élément de vision robotique (2), et l'outil remplaçable (5) à utiliser pour la tâche est changé dans l'unité de changement d'outil et l'élément de vision robotique est utilisé afin de contrôler le changement de l'outil remplaçable (5).

7. Procédé de commande selon la revendication 6, **caractérisé en ce que** l'élément de vision robotique (2) est utilisé afin d'aligner les outils remplaçables (5) et les articles à manipuler avec l'environnement, et de reconnaître, de mesurer et de comparer les articles et l'environnement.

8. Procédé de commande selon la revendication 6, **caractérisé en ce que** l'élément de vision robotique (2) est utilisé afin de contrôler l'assemblage et pour le contrôle qualité.

9. Procédé de commande selon l'une quelconque des revendications 6 à 8, **caractérisé en ce que** le système d'outil robotique est utilisé pour au moins l'un de ce qui suit : un soudage, une peinture (traitement de surface), un meulage, une découpe, un assemblage, un emballage (et le placement sur une plate-forme), une palettisation, un stockage, un transfert d'articles, un usinage, un entretien de machines, une reconnaissance de motif, un brasage, un collage, une distribution, une mesure, le placement d'inserts de mesure dans leur position.

10. Programme informatique (CU, MC) comprenant un groupe de commandes de programme permettant de contrôler un système d'outil robotique, ledit système d'outil robotique étant destiné à être relié à un bras (11) d'un robot, ledit système d'outil robotique comprenant au moins
- un outil (5),
- un actionneur (3) destiné à placer l'outil (5) dans une position d'utilisation,
- un élément de vision robotique (2) ayant une direction et une perspective de visée vers la zone de travail de l'outil (5), ledit élément de vision robotique étant prévu afin de contrôler le mouvement et le fonctionnement de l'outil (5),
et le programme comprend des commandes de programme permettant de traiter une image prise par l'élément de vision robotique (2) et de contrôler l'actionneur (3) et les outils (5),
**caractérisé en ce que** l'outil est un outil remplaçable (5) et **en ce que** le système comprend également une unité de changement d'outil (4) qui peut être déplacée à l'aide de l'actionneur (3) et qui peut être munie de l'outil remplaçable (5), et l'unité de changement d'outil (4) et l'actionneur (3) sont positionnés autour de la direction de visée de l'élément de vision robotique (2), et
le programme (CU, MC) comprend également des commandes de programme permettant de
- changer l'outil remplaçable (5) dans l'unité de changement d'outil (4), et
- contrôler le changement de l'outil remplaçable (5) sur la base des informations obtenues de la part de l'élément de vision robotique (2).

11. Programme selon la revendication 10, **caractérisé en ce que** le système d'outil robotique est relié à un robot qui comprend un contrôleur de robot (RCU), dans lequel le programme (CU, MC) comprend également des commandes de programme permettant une communication avec le contrôleur de robot (RCU).
